# EUROPÄISCHE PATENTSCHRIFT

(11) **EP 0 804 980 B1**
(45) Veröffentlichungstag und Bekanntmachung des Hinweises auf die Patenterteilung: **01.12.1999**
(21) Anmeldenummer: 97106500.8
(22) Anmeldetag: 19.04.1997
(51) Int. Cl.: B22C 1/22, C08G 18/54, C08K 5/10

(54) **Speisereinsätze und deren Herstellung**
Feeder inserts and production thereof
Inserts pour masselotte et leur procédé de fabrication

(30) Priorität: 27.04.1996 DE 19617938
(43) Veröffentlichungstag der Anmeldung: 05.11.1997
(73) Patentinhaber: CHEMEX GMBH, D-58300 Wetter (DE)
(72) Erfinder: Mekus, Eckard, 31515 Wunstorf (DE); Fifer, Peter, 30457 Hannover (DE)
(74) Vertreter: Eikenberg, Kurt-Rudolf, Dr. Dipl.-Chem.

(56) Entgegenhaltungen:
- EP-A- 0 313 907
- EP-A- 0 519 734
- EP-A- 0 771 599
- WO-A-95/14735
- US-A- 4 268 425
- DATABASE WPI Section Ch, Week 9409 Derwent Publications Ltd., London, GB; Class A25, AN 94-072000 XP002038830 & JP 06 025 383 A (SANYO CHEM IND LTD) , 1.Februar 1994
- PATENT ABSTRACTS OF JAPAN vol. 095, no. 004, 31.Mai 1995 & JP 07 002971 A (MITSUI TOATSU CHEM INC), 6.Januar 1995,

## Beschreibung

In der Gießereitechnik ist es unverzichtbar, Speiser zur Dichtungsspeisung der Gußstücke vorzusehen. Im Prinzip stellen diese Speiser Hohlräume dar, die mit dem Formenhohlraum des Gußstücks verbunden sind, von der Gießströmung mit flüssigem Metall gefüllt werden und so bemessen und ausgebildet sind, daß der Erstarrungsmodul des Speisers größer (üblicherweise um etwa 20 % größer) ist als der des Gußstücks. In vieler Hinsicht vorteilhaft ist es dabei, die Speiser mit einer wärmeisolierenden und/oder wärmeabgebenden Auskleidung zu versehen, und zu diesem Zweck sind auch bereits zahlreiche Typen von Speisereinsätzen entwickelt worden. Dabei handelt es sich um Formkörper, die aus einem durch ein Bindemittel gebundenen Gemisch aus isolierend und/oder exotherm wirkenden Bestandteilen und ggfs. weiteren, die Eigenschaften beeinflussenden Zuschlägen bestehen.

Aus der EP-A-313 907 ist ein Speisereinsatz bekannt, bestehend aus einem durch ein Bindemittel zu einem Formkörper gebundenen Gemisch aus isolierend und/oder exotherm wirkenden Bestandteilen sowie üblichen Zuschlagstoffen.

Aus der US-A-42 68 425, die die Herstellung von Gießformen und Gießkernen aus Sanden betrifft, ist ein Bindemittel auf Polyurethanbasis bekannt, dessen Komponenten ein freie OH-Gruppen enthaltendes Phenolharz und ein Polyisocyanat als Reaktionspartner umfassen.

Erstaunlicherweise ist der Aufwand für die Herstellung der schon seit langem bekannten und bewährten Speisereinsätze immer noch verhältnismäßig hoch. Im wesentlichen gibt es derzeit drei technisch durchgeführte Verfahren, nämlich
1.) Das Grünstandverfahren
   Hierbei werden die Einsätze - meistens unter Verwendung eines wärmehärtbaren Bindemittels, z.B. eines Phenolharzes - als "grüne" Formteile ausgeformt und anschließend getrocknet. Dieses Verfahren ist besonders fehleranfällig und erfordert viel Erfahrung. Eine große Palette an Rohstoffen und Bindern steht zur Verfügung, eine Automatisierung zur Steigerung der Produktivität ist jedoch nur bedingt möglich.
2.) Das CO₂-Begasungsverfahren
   Hierbei wird ein durch CO₂ härtbares Bindemittel verwendet, und durch das Begasen ergeben sich höhere Anfangsfestigkeiten als beim Grünstandverfahren. Es lassen sich also relativ maßgenaue Formrohlinge erzeugen, aber auch hier muß im nachherein getrocknet werden, und das gemeinhin verwendete Wasserglas stellt erhöhte Anforderungen an die Auswahl der Mineralstoffe und stört darüberhinaus die exotherme Reaktion. Die Hygroskopizität der Formkörper ist beträchtlich und schwer zu beheben.
3.) Das Filterschlickerverfahren
   Hierbei wird aus den Komponenten ein Schlicker erzeugt und durch einen Filtrationsprozeß als Formgebungsverfahren und anschließende Trocknung der Speisereinsatz erzeugt. Die Trocknung der Einsätze ist aufwendig und die Gasung oft immens.

Allen diesen Verfahren ist gemeinsam, daß die erzeugten Speisereinsätze einer Trocknung unterzogen werden müssen, bevor sie als fertige Produkte dem Verbrauch zugeleitet werden können. Das hat zahlreiche Nachteile zur Folge. Abgesehen von dem Energieverbrauch, den jede Trocknung zwangsläufig bedingt, stellt die Trocknung nämlich einen sehr aufwendigen Arbeitsvorgang dar. Sie muß peinlich genau erfolgen, und dies ist umso schwieriger, je besser isolierend das verwendete Material und je niedriger die anwendbare Temperatur ist. Trocknungszeiten von 0,5 bis 1 h pro Zentimeter Wandstärke sind gebräuchlich, und die Trocknungstemperaturen sind insbesondere bei exothermen Materialien sehr kritisch. Auch die Handhabung der Formkörper erfordert erheblichen Aufwand, um Beschädigungen oder Verformungen der vor dem Trocknen ja noch sehr empfindlichen Formkörper zu vermeiden.

Hier setzt die Erfindung ein. Sie hat zum Ziel, die bislang bei der Herstellung der Speisereinsätze erforderliche Trocknung zu vermeiden und erreicht dieses Ziel dadurch, daß für die Speisereinsätze ein Bindemittel auf Polyurethanbasis eingesetzt ist, dessen Komponenten ein freie OH-Gruppen enthaltendes Phenolharz und ein Polyisocyanat als Reaktionspartner umfassen, von denen mindstens eine in einem überwiegend oder ganz aus Pflanzenöl-Methylester bestehenden Lösungsmittel gelöst ist. Vorzugsweise sind dabei beide Komponenten vollständig in einem Pflanzenöl-Methylester gelöst.

Bindemittel auf Polyurethanbasis, bei denen ein freie OH-Gruppen enthaltendes Phenolharz und ein Polyisocyanat unter Urethan-Bildung zu einem ausgehärteten Bindemittel umgesetzt werden, sind als solche bekannt. Sie werden beispielsweise in der Gießereiindustrie zur Herstellung von Formen und Kernen verwendet, indem die beiden Komponenten mit einem Formgrundstoff vermischt und nach der Formgebung (z.B. in einer Schießmaschine) durch Begasen mit einem tertiären Amin sekundenschnell zur Urethanbildung, also zur Aushärtung gebracht werden. Eine Nachtrocknung ist dabei nicht erforderlich.

Bei Bindemitteln auf Polyurethanbasis sind Lösungsmittel erforderlich, um die Komponenten des Systems in einem ausreichend niedrig-viskosen Zustand zu halten. Dies gilt für die Phenolharze, die aufgrund ihrer höheren Viskosität regelmäßig ein Lösungsmittel benötigen, trifft aber auch auf die Polyisocyanate zu. Dabei benötigen die beiden Komponenten unterschiedliche Lösungsmittel-Typen, denn im allgemeinen sind unpolare Lösungsmittel gut für Polyisocyanate geeignet und nur weniger gut mit Phenolharzen verträglich, während für polare Lösungsmittel das umgekehrte gilt. In der Praxis werden deshalb normalerweise Gemische von polaren und unpolaren Lösungsmitteln eingesetzt. Als unpolare Lösungsmittel dienen dabei bevorzugt hochsiedende aromatische Kohlenwasserstoffe (meistens in Form von Gemischen) mit einem Siedebereich oberhalb von etwa 150° C bei Normaldruck, und als polare Lösungsmittel sind u.a. bestimmte ausreichend hochsiedende Ester zum Einsatz gekommen, wie z.B. die in der DE-A-27 59 262 beschriebenen "symmetrischen" Ester, bei denen sowohl der Säurerest als auch der Alkoholrest eine im gleichen Bereich liegende, relativ große Anzahl von C-Atomen (etwa 6 - 13 C-Atome) aufweist.

Es hat nicht an Versuchen gefehlt, die zur Herstellung von Formen und Kernen bekannten Polyurethan-Bindemittel auch zur Herstellung von Speisereinsätzen zu verwenden, um mit der Amin-Begasung schnell eine hohe Anfangshärte der Formkörper zu erzielen und eine Nachtrocknung vermeiden zu können. Diese Versuche sind jedoch gescheitert, insbesondere weil sich eine zu starke Rußentwicklung oder Gasung oder eine unerwünscht hohe Glanzkohlenstoffbildung einstellten. Umso überraschender ist die jetzt gefundene Erkenntnis, daß diese Nachteile der Polyurethan-Bindemittel verschwinden und sich Speisereinsätze mit ganz hervorragenden Eigenschaften ergeben, wenn Pflanzenöl-Methylester als Lösungsmittel für die Polyurethan-Komponenten verwendet werden. Ein solcher Erfolg war nicht vorhersehbar und läßt rückschauend die Vermutung zu, daß die hochsiedenden Aromaten, auf die bislang nicht verzichtet werden konnte, mitverantwortlich für das Scheitern der früheren Versuche gewesen sind. Genau ist dies jedoch noch nicht geklärt.

Insgesamt führt die Erfindung somit zu Speisereinsätzen, die durch Amin-Begasung sekundenschnell zu Formkörpern mit ausreichend hoher Anfangshärte aushärtbar sind und keine Erwärmung oder Trocknung benötigen. Diese Formkörper sind sehr maßhaltig, erfordern im Vergleich zu "grünen" Formkörpern keine besondere Sorgfalt in der Handhabung und sind praktisch sofort gebrauchsfertig. Im Gebrauch treten keine unerwünschten Erscheinungen wie Rußentwicklung, Gasung oder Glanzkohlenstoffbildung auf, und die Auswahl an den isolierenden und/oder exothermen Bestandteilen der Speiser sowie den sonstigen Zuschlägen ist nicht eingeschränkt, sondern kann in Art, Menge und Kombination ganz dem jeweiligen Bedarf entsprechend gewählt werden. Besonders hervorzuheben ist im übrigen als unerwarteter Zusatzvorteil die geringe Wasseraufnahme-Anfälligkeit der erfindungsgemäßen Speisereinsätze.

Unter dem Begriff "Pflanzenölmethylester", werden alle Monomethylester verstanden, die durch Umesterung von üblicherweise als Triglyceride vorliegenden Fetten und Ölen pflanzlicher Herkunft gewonnen werden. Rapsölmethylester ist ein typisches Beispiel solchen Esters und stellt ein bevorzugtes Lösungsmittel dar, zumal er als Dieselkraftstoff in ausreichender Menge preisgünstig zur Verfügung steht. Ebenso sind jedoch auch die Methylester anderer pflanzlicher Öle, wie beispielsweise des Sojaöls, Leinöls, Sonnenblumenöls, Erdnußöls, Holzöls, Palmöls, Kokosöls, Rizinusöls und/oder Olivenöls einsetzbar. Alle diese als Ausgangsmaterial dienenden Fette und Öle können in beliebiger Mischung vorliegen. Sie müssen auch keine frischen und reinen Natur-Produkte sein; es kann sich ebenso um gehärtete oder sonstwie behandelte Fette und Öle handeln. Auch Abfallöle und Abfallfette, wie z.B. gebrauchtes Speiseöl oder Frittierfett sind als Ausgangsmaterial für die erfindungsgemäß verwendbaren Methylester einsetzbar. Es ist somit ein weiterer Aspekt der Erfindung, daß für diese umweltbedenklichen Altmaterialien eine geeignete Verwertungsmöglichkeit zur Verfügung gestellt wird.

Aus gießtechnischen Gründen und auch aus Gründen des Umweltschutzes ist ein 100 %-iger Ersatz der herkömmlichen Lösungsmittel durch Pflanzenölmethylester bevorzugt, denn dann kommen die Vorteile der Erfindung in vollem Umfang zum Tragen. Es ist aber auch möglich, diese Methylester mit den oben angesprochenen herkömmlichen Lösungsmitteln, beispielsweise den aromatischen Kohlenwasserstoffen zu vermischen. Sofern solche Mischungen überwiegend, also zu mehr als 50 % aus den Methylestern bestehen, sind die Vorteile der Erfindung ebenfalls noch ausreichend vorhanden, wenngleich auch in einem graduell mit abnehmenden Gehalt an Methylestern abgeschwächten Ausmaß.

Der schon als typisches Beispiel für die erfindungsgemäß zu verwendenden Lösungsmittel genannte Rapsölmethylester ist ein umweltfreundliches und CO₂-neutrales Naturprodukt. Er ist hochsiedend und ausreichend dünnflüssig, erfüllt also die physikalischen Anforderungen an ein Lösungsmittel für Polyurethan-Bindemittelsysteme. Auch ist er praktisch geruchfrei und arbeitsplatzmäßig als unbedenklich eingestuft. Weiterhin ist er nicht als brennbares Gefahrgut klassifiziert, was den Transport und die Lagerung der damit hergestellten Lösungen wesentlich vereinfacht. Außerdem führt er beim Abguß kaum zu unerwünschten gasförmigen Spaltprodukten, weil die zahlreichen Doppelbindungen (Rapsöl enthält überwiegend einfach- und mehrfach-ungesättigte Fettsäuren) zu festen, nicht ausgasenden Verbindungen reagieren. Die maximal tolerierbaren Arbeitsplatzkonzentrationen werden bei der Verwendung von Rapsölmethylester als Lösungsmittel nicht annähernd erreicht. Im übrigen ergibt Rapsölmethylester auch eine ausgezeichnete Trennwirkung beim Entfernen der Speisereinsätze aus der Schießmaschine, so daß der Einsatz von zusätzlichen Trennmitteln nicht erforderlich ist.

Für die anderen Pflanzenölmethylester und Pflanzenölmethylestermischungen sind analoge Aussagen zutreffend. Herausgehoben sei noch wegen seiner unproblematischen Verarbeitbarkeit der Methylester des Sojaöls. Besonders gute Ergebnisse - im Einzelfall sogar bessere als mit Rapsölmethylester - wurden aber mit dem Methylester des Leinöls erhalten. Rizinusölmethylester ist insbesondere als Lösungsmittel für das Phenolharz geeignet, kommt allerdings wegen seines Gehalts an OH-Gruppen weniger für die Polyisocyanate in Betracht.

Nachfolgend wird die Erfindung in Ausführungsbeispielen näher erläutert. Die Mengenangaben bedeuten dabei, soweit nichts anderes angegeben, Gewichtsteile.

### Beispiel 1

In einem Reaktionsgefäß, das mit Kühler, Thermometer und Rührer ausgerüstet war, wurden
- 385,0 GT: Phenol
- 176,0 GT: Paraformaldehyd und
- 1,1 GT: Zinkacetat
vorgelegt. Der Kühler wurde auf Rückfluß gesetzt. Die Temperatur wurde innerhalb einer Stunde kontinuierlich ansteigend auf 105° C gebracht und zwei bis drei Stunden auf dieser Temperatur gehalten, bis ein Brechungsindex von 1,590 erreicht war. Dann wurde der Kühler auf atmosphärische Destillation umgestellt und die Temperatur innerhalb einer Stunde auf 125 - 126° C erhöht, bis ein Brechungsindex von etwa 1,593 erreicht war. Danach erfolgte eine Vakuumsdestillation bis zu einem Brechungsindex von 1,612. Die Ausbeute betrug 82 - 83 % der eingesetzten Rohstoffe.

Aus diesem Phenolharz wurde bei Erreichen des Sollwertes eine Lösung mit folgender Zusammensetzung hergestellt:

### Harzlösung

- 55,0 GT: Phenolharz
- 25,0 GT: Rapsölmethylester
- 17,0 GT: DBE ^{(H)} (Gemisch aus Dimethylestern von C₄ - C₆-Dicarbonsäuren)
- 3,0 GT: Isophoron.

Weiterhin wurde folgende Polyisocyanat-Lösung bereitgestellt:

### Aktivator

- 85,0 GT: Diphenylmethandiisocyanat (MDI technisch)
- 15,0 GT: Rapsölmethylester und
- 0,2 GT: Säurechlorid

### Beispiele 2 - 4

Es wurden drei unterschiedliche Speisereinsätze hergestellt, nämlich ein isolierend-exothermer Einsatz (Beispiel 2), ein exothermer Einsatz (Beispiel 3) und ein isolierender Einsatz (Beispiel 4). Die wirksamen Bestandteile dieser Einsätze und die verwendeten Zuschläge sind in der Tabelle angegeben, und zwar in Gewichtsteilen.

| | Beispiel 2 | Beispiel 3 | Beispiel 4 |
|---|---|---|---|
| **Bestandteile** | | | |
| Aluminiumgrieß | 25,0 GT | 31,1 GT | - |
| Kryolith | 2,0 GT | 3,6 GT | - |
| Kaliumnitrat | 12,0 GT | 16,1 GT | - |
| Sand | 41,0 GT | 45,6 GT | - |
| Hohlkugeln | 20,0 GT | - | 100,0 GT |
| Eisenoxidrot | - | 3,6 GT | - |
| **Summe** | 100,0 GT | 100,0 GT | 100,0 GT |

| **Bindemittel** | | | |
|---|---|---|---|
| Harzlösung | 3,5 GT | 4,0 GT | 6,7 GT |
| Aktivator | 4,4 GT | 5,5 GT | 8,4 GT |

| **Festigkeiten** | | | |
|---|---|---|---|
| sofort | 210 N/cm² | 100 N/cm² | 200 N/cm² |
| nach 1 Tag | 400 N/cm² | 210 N/cm² | 270 N/cm² |
| nach 5 Tagen | 420 N/cm² | 250 N/cm² | 290 N/cm² |

In allen Fällen wurden die Bestandteile und die Zuschläge mit dem Bindemittel gemäß Beispiel 1 vermischt, das aus den in der Tabelle angegebenen Mengen an Phenolharz (Harzlösung) und Polyisocyanat (Aktivator) bestand.

Die so erhaltene Masse wurde sodann mittels einer Schießmaschine zu Speiserkappen geformt und mit Dimethylisopropylamin begast. Es ergaben sich Formkörper, welche die in der Tabelle angegebenen Festigkeiten aufwiesen und ohne Trocknung sofort gebrauchsfertig waren.

### Beispiel 5

Die Speiserkappen gemäß Beispiel 2 wurden über 5 Tage im Feuchtraum bei 85 % relativer Feuchtigkeit gelagert. Es ergab sich eine Wasseraufnahme von nur 0,1 Gew.-%.

Zum Vergleich wurden exotherme Kappen nach dem Grünstandverfahren hergestellt, indem
- 92,0 GT: Exotherme Grundmasse, enthaltend 25 % Al Grieß, 12 % Kalumnitrat
- 1,5 GT: Quellmehl
- 1,5 GT: Dimethylolharnstoff
- 5,0 GT: pulverförmiges Phenolfestharz vom Novolaktyp
miteinander vermischt, mit 12 % Anmachwasser versetzt, geformt und bei 220° C getrocknet. Diese Vergleichskappen zeigten unter den gleichen Bedingungen eine Wasseraufnahme von 2 Gew.-%, und andere Kappen, die mit Wasserglas und CO₂-Begasung hergestellt waren, sogar eine Wasseraufnahme von 10 Gew.-%.

### Beispiel 6

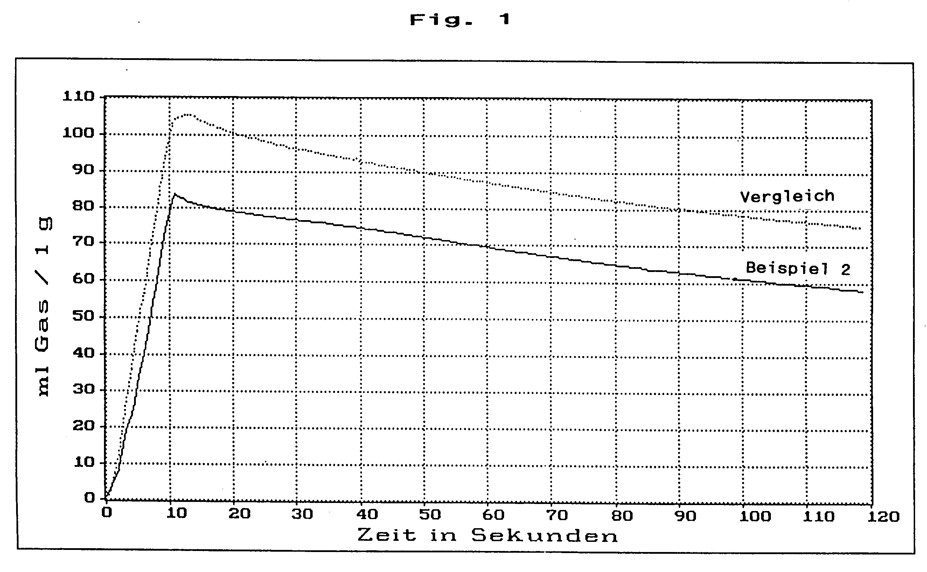

Die Gasung beim Erhitzen Ist ein gutes Kriterium zur Beurteilung der Brauchbarkeit eines Speisereinsatzes. In der Fig. 1 ist für die Speiserkappen gemäß Beispiel 2 die Gasentwicklung als Funktion der Zeit angegeben, und zwar im Vergleich zu denjenigen mit Phenolharz gebundenen, nach dem Grünstandverfahren hergestellten Kappen, die auch im Beispiel 5 als Vergleichsmaterial dienten. Es ist zu erkennen, daß bei den Kappen gemäß Beispiel 2 sowohl die absolute Gasmenge, dargestellt durch die Höhe der Kurvenlage im Diagramm, als auch die Gasabgabegeschwindigkeit, dargestellt durch die Steilheit des ansteigenden Kurvenastes, hinter den Vergleichskappen zurückbleibt. Das ist ein gutes, brauchbares Verhalten.

## Patentansprüche

1. Speisereinsatz, bestehend aus einem durch ein Bindemittel zu einem Formkörper gebundenen Gemisch aus isolierend und/oder exotherm wirkenden Bestandteilen sowie üblichen Zuschlagstoffen, dadurch gekennzeichnet, daß
- das Bindemittel ein Bindemittel auf Polyurethanbasis ist, dessen Komponenten ein freie OH-Gruppen enthaltendes Phenolharz und ein Polyisocyanat als Reaktionspartner umfassen,
wobei der Speisereinsatz mittels eines Verfahrens erhältlich ist, in dem
- mindestens eine der Komponenten in einem Lösungsmittel gelöst wird, das überwiegend oder ganz aus Pflanzenöl-Methylester besteht,
- die isolierend und/oder exotherm wirkenden Speiser-Bestandteile sowie die üblichen Zuschlagstoffe mit den Komponenten vermischt werden und
- diese Mischung zu einem Formkörper geformt und ausgehärtet wird.

2. Speisereinsatz nach Anspruch 1, dadurch gekennzeichnet, daß die Lösungsmittel für die beiden Komponenten jeweils vollständig aus Pflanzenöl-Methylester bestehen.

3. Verfahren zur Herstellung von Speisereinsätzen nach Anspruch 1 oder Anspruch 2, dadurch gekennzeichnet, daß isolierend und/oder exotherm wirkende Speiser-Bestandteile sowie übliche Zuschlagstoffe mit einem in Pflanzenölmethylester gelösten, freie OH-Gruppen enthaltenden Phenolharz und einem in Pflanzenölmethylestern gelösten Polyisocyanat vermischt werden, diese Mischung zu Formkörpern geformt und durch Begasung mit einem tertiären Amin zur Aushärtung gebracht wird.

## Claims

1. Feeder insert, comprising a mixture, which is bound together by a binder to form a shaped body, of constituents which have an insulating and/or exothermic action and conventional additives, characterized in that
- the binder is a polyurethane-based binder, the components of which comprise a phenolic resin containing free OH groups and a polyisocyanate as reaction partners,
it being possible to obtain the feeder insert by means of a method in which
- at least one of the components is dissolved in a solvent which consists predominantly or entirely of vegetable oil methyl ester,
- the feeder constituents which have an insulating and/or exothermic action and the customary additives are mixed with the components and
- this mixture is shaped into a shaped body and cured.

2. Feeder insert according to Claim 1, characterized in that the solvents for the two components each entirely consist of vegetable oil methyl ester.

3. Method for producing feeder inserts according to Claim 1 or Claim 2, characterized in that feeder constituents which have an insulating and/or exothermic action, as well as customary additives, are mixed with a phenolic resin, which is dissolved in vegetable oil methyl ester and contains free OH groups, and a polyisocyanate, which is dissolved in vegetable oil methyl esters, this mixture is shaped into shaped bodies and is cured by exposure to a tertiary amine gas.

## Revendications

1. Insert pour masselotte constitué par un mélange de constituants agissant de manière isolante et/ou exothermique et d'agrégats usuels, lié par un liant en un corps moulé, caractérisé en ce que
- le liant est un liant à base de polyuréthane dont les composants comprennent une résine phénolique qui contient des groupes hydroxyles libres et un polyisocyanate comme partenaires réactionnels,
l'insert pour masselotte pouvant être obtenu au moyen d'un procédé dans lequel
- au moins l'un des composants est dissous dans un solvant qui est constitué en grande partie ou entièrement par un ester méthylique d'huile végétale,
- les constituants de la masselotte agissant de manière isolante et/ou exothermique sont mélangés aux composants et
- ce mélange est moulé en un corps moulé et durci.

2. Insert pour masselotte selon la revendication 1, caractérisé en ce que les solvants pour les deux composants sont respectivement constitués entièrement par de l'ester méthylique d'huile végétale.

3. Procédé pour la fabrication d'inserts pour masselottes selon la revendication 1 ou la revendication 2, caractérisé en ce que des constituants agissant de manière isolante et/ou exothermique ainsi que des agrégats usuels sont mélangés à une résine phénolique dissoute dans de l'ester méthylique d'huile végétale, contenant des groupes hydroxyles libres, et à un polyisocyanate dissous dans des esters méthyliques d'huile végétale, que ce mélange est moulé en corps moulés et est durci par traitement au gaz avec un amine tertiaire.
